# EUROPÄISCHE PATENTSCHRIFT

(11) **EP 0 346 735 B1**
(45) Veröffentlichungstag und Bekanntmachung des Hinweises auf die Patenterteilung: **30.08.1995**
(21) Anmeldenummer: 89110212.1
(22) Anmeldetag: 06.06.1989
(51) Int. Cl.: C08G 63/78

(54) **Verfahren zur kontinuierlichen Herstellung von linearen thermoplastischen Polyestern**
Process for the continuous preparation of linear thermoplastic polyesters
Procédé pour la préparation continue de polyesters linéaires thermoplastiques

(30) Priorität: 15.06.1988 DE 3820362
(43) Veröffentlichungstag der Anmeldung: 20.12.1989
(73) Patentinhaber: BASF Aktiengesellschaft, 67063 Ludwigshafen (DE)
(72) Erfinder: Pipper, Gunter, D-6702 Bad Duerkheim (DE); Simon, Georg Nikolaus, Dr., D-6703 Limburgerhof (DE); Heinz, Gerhard, Dr., D-6719 Weisenheim (DE); Ittemann, Peter, Dr., Fort Mill, S.C. 29715 (US); Schleier, Gisbert, Dr., D-6900 Heidelberg (DE)

(56) Entgegenhaltungen:
- EP-A- 0 000 918
- DE-A- 2 043 187
- FR-A- 1 545 487
- FR-A- 2 240 246
- GB-A- 819 721
- GB-A- 1 263 637
- GB-A- 2 184 129
- US-A- 4 154 920

## Beschreibung

Lineare thermoplastische Polyester wie Polyethylenterephthalat oder Polybutylenterephthalat werden in großem Maßstab technisch hergestellt. Hierbei werden die Dicarbonsäuren mit den Diolen entweder direkt verestert oder Dicarbonsäureester, wie Dimethylterephthalat mit Diolen umgeestert und das so erhaltene Veresterungsprodukt in der Schmelze unter Abspalten von Diolen polykondensiert. Die Polykondensation ist jedoch nicht problemlos, da bei den erforderlichen Kondensationstemperaturen parallel Zersetzungreaktionen ablaufen, die für die Qualtität des erzeugten Polyesters abträglich sind.

Aus der DE-OS 1 926 767 ist bereits ein Verfahren zur Herstellung von Polyestern bekannt, bei dem man das Umesterungsprodukt von oben nach unten durch ein gequetschtes Rohr unter Ausbildung eines Film an der Rohrinnenwand leitet und eine Temperatur von 240 bis 320°C und einen Druck von 0,1 bis 600 Torr einhält, anschließend dampfförmige Produkte und Vorkondensat trennt und letzteres aus dem Abscheider entnimmt. Dieses Verfahren hat den Nachteil, daß die Quetschstellen sehr leicht verstopft werden und zudem die Ausbildung des dünnen Films nicht kontrollierbar ist, wodurch Qualitätsschwankungen in Kauf genommen werden müssen. In der Technik hat man deshalb diesen Weg verlassen und einen anderen Weg beschritten. Wie aus der DE-OS 2 514 116 bekannt ist, wird bei der Herstellung von Polybutylenterephthalat das Umesterungsgemisch von unten nach oben durch ein Röhrenbündel geleitet unter Ausbildung einer Dampfphase, wobei oben am Röhrenbündel ein Nachverweilbehälter angeordnet ist. Das so erhaltene Kondensat hat jedoch den Nachteil, daß es nicht granulierfähig ist und als solches für eine Festphasenkondensation nicht verwendet werden kann.

Es war deshalb die technische Aufgabe gestellt, ein kontinuierliches Verfahren zur Herstellung von linearen thermoplastischen Polyestern zur Verfügung zu stellen, bei dem man granulierfähiges Polyesterkondensat erhält, das auf einfache Weise in fester Phase weiter zu hochmolekularen Produkten weiterkondensiert werden kann und das in kurzer Zeit verläuft und ein gleichmäßiges Polykondensat unter Vermeidung von Qualitätsminderung ergibt.

Diese Aufgabe wird gelöst in einem Verfahren zur kontinuierlichen Herstellung von linearen thermoplastischen Polyestern, wobei man
a) ein Um- oder Veresterungsprodukt von aliphatischen und/oder aromatischen Dicarbonsäuren mit einem Molekulargewicht < 300 oder deren esterbildenden Derivaten mit aliphatischen und/oder cycloaliphatischen Diolen mit einem Molekulargewicht < 250, das zusätzlich Poly(alkylenoxid)glykole mit einem Molekulargewicht von 400 bis 4 000 enthalten kann, bei einer Temperatur von über 240°C und unter vermindertem Druck von oben nach unten durch eine rohrförmige, im wesentlichen senkrechte Vorkondensationszone leitet unter Bildung eines Vorkondensats und dampfförmigen Diolen mit einem Molekulargewicht < 250,
b) das Vorkondensat und dampfförmige Diole trennt und
c) das Vorkondensat aus der sich ergebenden Sumpfphase austrägt,
dadurch gekennzeichnet, daß man
in der Stufe a) eine Temperatur von 250 bis 360°C, einen Druck von 0,5 bis 20 Torr und eine Verweilzeit von 3 bis 10 Minuten einhält und die rohrförmige Vorkondensationszone mit Einbauten versehen ist, die eine freie Oberfläche von 0,30 bis 1,50 m²/l haben und
in der Stufe c) das Vorkondensat bei einer Temperatur von 240 bis 290°C unter einem Druck von 0,5 bis 20 Torr sowie einer Verweilzeit von 10 bis 40 Minuten weiterkondensiert und granulierfähigen Polyester erhält.

Das neue Verfahren hat den Vorteil, daß es in kurzer Zeit ohne Schädigung des Polyesters verläuft und Verstopfungen in der Vorkondensationszone vermieden werden. Darüber hinaus hat das neue Verfahren den Vorteil, daß man sofort granulierfähigen Polyester erhält, der sich für die Kondensation zu hochmolekularen Polyester in fester Phase eignet.

Erfindungsgemäß geht man von Um- oder Veresterungsprodukten von aliphatischen und/oder aromatischen Dicarbonsäuren mit einem Molekulargewicht < 300 oder deren esterbildenden Derivaten mit aliphatischen und/oder cycloaliphatischen Diolen mit einem Molekulargewicht von < 250, das zusätzlich Poly(alkylenoxid)glykole mit einem Molekulargewicht von 400 bis 4 000 erhalten kann, aus.

Geeignete aliphatische Dicarbonsäuren sind z.B. Alkandicarbonsäuren mit 4 bis 12 Kohlenstoffatomen, insbesondere geradkettige α-ω-Dicarbonsäuren der genannten Kohlenstoffzahl, wie Adipinsäure, Glutarsäure, Azelainsäure oder Dodecandisäure.

Bevorzugte aromatische Dicarbonsäuren haben 8 bis 14 Kohlenstoffatome, in denen die Carboxylgruppen an einen isolierten oder kondensierten Benzolring gebunden sind und sofern mehr als ein aromatischer Ring vorliegt, diese durch eine chemische Verbindung oder einen zweiwertigen Rest, wie -O-, -SO₂- oder -CO- verbunden sind. Geeignete aromatische Dicarbonsäuren sind beispielsweise Terephthalsäure, Isophthalsäure, Phthalsäure, Naphthalindicarbonsäure, 4,4′-Dicarboxydiphenyl, Bis(p-carboxyphenyl)ether, Bis(p-carboxyphenyl)sulfon oder Bis(p-carboxyphenyl)keton oder Gemische derselben. Besonders bevorzugt sind Benzoldicarbonsäuren, insbesondere Terephthalsäure und Isophthalsäure.

Anstatt der genannten Dicarbonsäuren können jeweils auch deren esterbildenden Derivate wie Ester mit niederen Alkanolen, z.B. Methylester eingesetzt werden.

Bevorzugte aliphatische Diole sind Alkandiole mit 2 bis 6 Kohlenstoffatomen, insbesondere geradkettige Alkandiole der genannten Kohlenstoffzahl. Besondere Bedeutung haben Alkandiole mit 2 bis 4 Kohlenstoffatomen erlangt. Geeignet sind beispielsweise Ethandiol, Propandiol-1,3, Butandiol-1,4, Hexandiol-1,6. Andere geeignete Diole sind cycloaliphatische Diole mit 8 bis 10 Kohlenstoffatomen, z.B. Cyclohexandiol-1,4 oder Dimethylolcyclohexan und auch Mischungen aus den genannten Diolen.

Bevorzugte Poly(alkylenoxid)glykole sind Poly(C₂-C₄-alkylenoxid)glykole mit einem Molekulargewicht von 400 bis 4000, insbesondere von 600 bis 2000.

Zur Herstellung der Veresterungsprodukte werden die vorgenannten Ausgangsstoffe zusammen z.B. auf eine Temperatur von 160 bis 230°C unter fortlaufender Entfernung von Wasser in Gegenwart von Katalysatoren, z.B. Tetrabutylorthotitanat erhitzt. Bevorzugt geht man jedoch von Umesterungsprodukten aus, die durch Umestern von Dicarbonsäureestern, z.B. Methylestern, mit den vorgenannten Diolen und gegebenenfalls Poly(alkylenoxid)glykolen bei einer Temperatur von 160 bis 230°C unter fortlaufender Entfernung der Alkanolen in Gegenwart von üblichen Umesterungskatalysatoren wie Zink-, Calcium- oder Manganverbindung ferner Titanverbindungen wie Titansäureester, z.B. Tetrabutyl-o-titanat oder Titanylverbindungen in Mengen von 0,02 bis 0,3 Gew.%, bezogen auf Dicarbonsäureester, erhält.

Sowohl bei der Veresterung als auch bei der Umesterung werden je Mol Dicarbonsäure bzw. Dicarbonsäureester 1,1 bis 1,8 Mol, insbesondere 1,2 bis 1,7 Mol Diole mit einem Molekulargewicht von < 250 eingesetzt. Sofern Poly(alkylenoxid)glykole mitverwendet werden, werden diese in der gewünschten Menge zusätzlich zugegeben.

Für die Herstellung von bevorzugten Poly-C₂-C₄-alkylenterephthalaten geht man von Terephthalsäure oder dessen Ester sowie C₂-C₄-Alkanolen aus. Andere bevorzugte Polymere sind segmentierte Polyester, die zu mindestens aus 15 Mol.%, vorzugsweise 50 bis 70 Mol.% Polyalkylenterephthalateinheiten und höchstens 85 Mol.%, vorzugsweise 10 bis 50 Mol.% langkettigen Terephthalat-Einheiten mit Poly(C₂-C₄)alkylenoxidglykolen aufgebaut sind und bis zu 30 Mol.% der Terephthalsäure durch Isophthalsäure ersetzt sein kann. Bei der Herstellung des Ausgangsgemisches werden neben den niedermolekularen Dicarbonsäure- und Diolkomponenten entsprechende Mengen an Poly(C₂-C₄)alkylenoxidglykolen zugesetzt

Erfindungsgemäß wird in einer Stufe a) das Um- oder Veresterungsprodukt von oben nach unten durch eine im wesentlichen senkrechte rohrförmige Vorkondensationszone geleitet. Die Vorkondensationszone hat vorteilhaft einen Durchmesser von 30 bis 50 mm und ein Verhältnis von Länge: Durchmesser von 133 bis 80:1. In der Vorkondensationszone hält man eine Temperatur von 250 bis 360°C, insbesondere von 260 bis 320°C ein. Ferner hält man in der Vorkondensationszone eine Verweilzeit von 3 bis 10 Minuten, insbesondere von 4 bis 7 Minuten ein. Die Vorkondensation wird unter einem Druck von 0,5 bis 20 Torr, insbesondere von 0,5 bis 10 Torr durchgeführt. Die Druckangabe bezieht sich auf den Endteil der Vorkondensationszone, da das Ausgangsgemisch mit einem höheren Druck, z.B. von 0,5 bis 0,8 bar oben in die Vorkondensationszone zugeführt wird und der Druck im Verlauf der Vorkondensationszone auf den vorgenannten Wert abnimmt. Während der Vorkondensation verdampfen Diole mit einem Molekulargewicht < 250 unter Bildung eines zweiphasigen Gemisches aus Vorkondensat und dampfförmigen Diolen.

Um eine gute Durchmischung des zweiphasigen Gemisches aus Vorkondensat und dampfförmigen Diolen zu erzielen, ist die Vorkondensationszone mit Einbauten versehen. Die Einbauten haben eine freie Oberfläche von 0,3 bis 1,5 m² je l. Geeignete Einbauten sind beispielsweise Füllkörper, wie Raschigringen oder Pallringe. Besonders vorteilhaft hat es sich erwiesen, wenn im ersten Drittel der Vorkondensationszone von oben gerechnet, die Einbauten eine freie Oberfläche von 0,9 bis 1,5 m² je l haben und in den restlichen zwei Drittel der Vorkondensationszone eine freie Oberfläche von 0,3 bis 0,5 m² je l aufweisen.

Das aus der Vorkondensationszone austretende Vorkondensat hat in der Regel eine relative Viskosität von 1,06 bis 1,18, insbesondere von 1,12 bis 1,14.

Das aus der Vorkondensation austretende zweiphasige Gemisch aus Dämpfen und Vorkondensat wird getrennt. Die Trennung erfolgt in der Regel von selbst aufgrund der physikalischen Unterschiede im Abscheider, wobei der untere Teil des Abscheiders vorteilhaft als Kondensationszone ausgebildet ist. Die freiwerdenden Brüden bestehen im wesentlichen aus Diolen mit einem Molekulargewicht < 250 die für die Herstellung des Ausgangsgemischs eingesetzt wurden. Diese Brüden werden vorteilhaft kondensiert, durch Destillation gereinigt und wiederum für die Reaktion verwendet.

Das erhaltene Vorkondensat wird in einer Kondensationsstufe c) bei einer Temperatur von 240 bis 290°C, insbesondere 260 bis 280°C unter Einhalten einer Verweilzeit von 10 bis 40 Minuten, insbesondere 25 bis 35 Minuten und unter einem Druck von 0,5 bis 20 Torr, vorzugsweise 0,5 bis 10 Torr weiterkondensiert und ein granulierfähiges Polyesterkondensat erhalten. Der so erhaltene Polyester hat in der Regel eine relative Viskosität von 1,2 bis 1,5. Es versteht sich, daß die angewandte Kondensationstemperatur über dem Schmelzpunkt des jeweils herzustellenden Polyesters liegt.

Um hochmolekulare Polyester zu erhalten, leitet man nach einer bevorzugten Arbeitsweise das so erhaltene Kondensat schmelzflüssig in eine weitere Kondensationszone und kondensiert dort unter fortlaufender Ausbildung neuer Oberflächen bei einer Temperatur von 270 bis 290°C unter einem Druck von z.B. 0,5 bis 2,0 Torr bis zur gewünschten Viskosität. Eine geeignete Arbeitsweise wird beispielsweise beschrieben in der DE-OS 25 14 116.

Nach einer anderen bevorzugten Arbeitsweise wird die Kondensation zu hochmolekularen Polyestern in der Festphase durchgeführt. Der in Strängen gegossene und granulierte Polyester aus der Stufe c) wird mittels erhitzten Inertgasen wie Stickstoff oder Kohlendioxid bei einer Temperatur von 5 bis 40°C unter dem Schmelzpunkt des jeweils zu kondensierenden Polyesters bis zur gewünschten Viskosität kondensiert.

Übliche Zusätze, wie Mattierungsmittel, z.B. Titandioxid oder Stabilisatoren ferner Zusätze von faser- oder teilchenförmigen Füllstoffen, Flammschutzmitteln oder Zähmodifizierungsmitteln werden vorzugsweise dem aus der Stufe c) ausgetragenen Polyester, z.B. in einem Extruder zugemischt und dann das so erhaltene Granulat der Festphasenkondensation zugeführt.

Die nach dem Verfahren der Erfindung hergestellten Polyester eignen sich zur Herstellung von Fäden, Fasern, Folien und Formkörpern.

Das Verfahren nach der Erfindung sei an folgenden Beispielen veranschaulicht.

### Beispiel 1

In einem Reaktionsgefäß wurden 36,75 kg Dimethylterephthalat (189,2 mol), 28,3 kg Butandiol-1,4 (314 mol), 14,5 kg Polytetrahydrofuran mit einem Molekulargewicht von 1000 (14,5 mol), 4 kg Toluol als Schleppmittel sowie 33 g Tetrabutyl-ortho-titanat (600 ppm bezogen auf das Polymere) 2 Stunden auf 190°C unter Atmosphärendruck erhitzt, wobei das bei der Umesterung entstehende Methanol fortlaufend abdestilliert wurde. Das so erhaltene Umesterungsprodukt mit einer relativen Viskosität von 1,050 (gemessen 0,5 %ig in Phenol-o-dichlorbenzol 1:1 bei 25°C) wurde wie folgt in einer Vorkondensationszone mit dem Durchmesser von 30 mm und einer Länge von 4000 mm, die mit Raschigringen gefüllt war, kondensiert. Im oberen Drittel betrug die freie Oberfläche 0,9 m²/l, in den restlichen zwei Dritteln der Vorkondensationszone 05 m²/l. Stündlich wurden 4 kg des Umesterungsgemisches zusammen mit 400 ppm Tetrabutylorthotitanat oben zudosiert und bei einer Temperatur von 285°C und unter einem Druck von 3 bis 8 Torr mit einer Verweilzeit von 5 min durch die Vorkondensationszone geleitet unter Ausbildung von dampfförmigem Butandiol und unter Bildung eines Vorkondensats. Das aus der Vorkondensationszone austretende Gemisch aus Vorkondensat und dampfförmigem Butandiol-1,4 wurde in einem Abscheider von dampfförmigen Butandiol getrennt. Das Vorkondensat hatte eine relative Viskosität von 114. Die Schmelze verweilte im Abscheider, der als Kondensationszone dient, noch 35 Minuten bei einer Temperatur von 275°C und unter einem Druck von 3 bis 8 Torr, wurde dann mittels einer Zahnradpumpe in Form von Strängen ausgetragen und in einem Wasserbad verfestigt und anschließend granuliert.

Das so erhaltene Granulat wurde in einer Festphasenkondensation unter Zuführung von Stickstoff bei 210°C mit einer Verweilzeit von 40 Stunden auf eine relative Viskosität von 2,01 »m/g getempert.

## Patentansprüche

1. Verfahren zur kontinuierlichen Herstellung von linearen thermoplastischen Polyestern, wobei man
a) ein Um- oder Veresterungsprodukt von aliphatischen und/oder aromatischen Dicarbonsäuren mit einem Molekulargewicht < 300 oder deren esterbildenden Derivate mit aliphatischen und/oder cycloaliphatischen Diolen mit einem Molekulargewicht < 250 das zusätzlich Poly(alkylenoxid)glykole mit einem Molekulargewicht von 400 bis 4000 enthalten kann bei einer Temperatur über 240°C und unter vermindertem Druck von oben nach unten durch eine im wesentlichen senkrecht stehende rohrförmige Vorkondensationszone leitet unter Bildung eines Vorkondensats und dampfförmigen Diolen mit einem Molekulargewicht < 250,
b) das Vorkondensat und dampfförmige Diole trennt und
c) das Vorkondensat aus dem Sumpf austrägt,
dadurch gekennzeichnet, daß man
in der Stufe a) eine Temperatur von 250 bis 360°C, einen Druck von 0,5 bis 20 Torr und eine Verweilzeit von 3 bis 10 Minuten einhält und die rohrförmige Vorkondensationszone mit Einbauten versehen ist, die eine freie Oberfläche von 0,3 bis 1,5 m²/l haben und
in der Stufe c) das Vorkondensat bei einer Temperatur von 240 bis 290°C unter einem Druck von 0,5 bis 20 Torr und einer Verweilzeit von 10 bis 40 Minuten weiterkondensiert wird und granulierfähigen Polyester erhält.

2. Verfahren nach Anspruch 1 dadurch gekennzeichnet, daß die Vorkondensationszone im ersten Drittel von oben gesehen eine innere Oberfläche von 0,9 bis 1,5 m²/l und in den restlichen zwei Dritteln eine innere Oberfläche von 0,3 bis 0,5 m²/l hat.

3. Verfahren nach den Ansprüchen 1 und 2, dadurch gekennzeichnet, daß man in der Stufe a) eine Verweilzeit von 4 bis 7 Minuten einhält.

4. Verfahren nach den Ansprüchen 1 bis 3, dadurch gekennzeichnet, daß man in der Vorkondensationszone bis zu einer relativen Viskosität von 1,06 bis 1,18 kondensiert.

5. Verfahren nach den Ansprüchen 1 bis 4, dadurch gekennzeichnet, daß man in der Stufe c) bis zu einer relativen Viskosität von 1,20 bis 1,50 kondensiert.

6. Verfahren nach den Ansprüchen 1 bis 5, dadurch gekennzeichnet, daß man den Polyester nach der Stufe c) in fester Form bei einer Temperatur von 5 bis 40°C unter dem Schmelzpunkt des Polyesters in fester Phase in Inertgasatmosphäre weiterkondensiert.

## Claims

1. A process for the continuous production of a linear thermoplastic polyester by
a) passing an esterification or transesterification product of an aliphatic and/or aromatic dicarboxylic acid having a molecular weight of < 300 or an ester-forming derivative thereof with an aliphatic and/or cycloaliphatic diol having a molecular weight of < 250 which may additionally contain a poly(alkylene oxide) glycol having a molecular weight of 400 to 4000 at above 240°C under reduced pressure downward through an essentially upright tubular precondensation zone to form a precondensate and a vaporous diol having a molecular weight of < 250,
b) separating the precondensate and the vaporous diol and
c) discharging the precondensate from the bottom,
characterized in that
in stage a) a temperature of from 250 to 360°C, a pressure of from 0.5 to 20 mmHg and a residence time of from 3 to 10 minutes are maintained and the tubular precondensation zone is equipped with internal fitments having a free surface area of from 0.3 to 1.5 m²/l and
in stage c) the precondensate is further condensed at from 240 to 290°C under a pressure of from 0.5 to 20 mmHg in the course of a residence time of from 10 to 40 minutes and granulable polyester is obtained.

2. A process as claimed in claim 1, characterized in that the precondensation zone has in the top third an inner surface area of from 0.9 to 1.5 m²/l and the remaining two thirds an inner surface area of from 0.3 to 0.5 m²/l.

3. A process as claimed in claim 1 or 2, characterized in that a residence time of from 4 to 7 minutes is maintained in stage a).

4. A process as claimed in any of claims 1 to 3, characterized in that the condensation in the precondensation zone is carried on to a relative viscosity of from 1.06 to 1.18.

5. A process as claimed in any of claims 1 to 4, characterized in that the condensation in stage c) is carried on to a relative viscosity of from 1.20 to 1.50.

6. A process as claimed in any of claims 1 to 5, characterized in that, following stage c), the polyester is further condensed in solid form at from 5 to 40°C below the melting point of the polyester in solid phase in an inert gas atmosphere.

## Revendications

1. Procédé pour la préparation en continu de polyesters thermoplastiques linéaires, dans lequel
a) on fait passer un produit de transestérification ou d'estérification de diacides carboxyliques aliphatiques et/ou aromatiques ayant une masse moléculaire < 300 ou de leurs dérivés formant des esters, et de diols aliphatiques et/ou cycloaliphatiques ayant une masse moléculaire < 250, qui peut de plus contenir des poly(oxyalkylène)-glycols ayant une masse moléculaire de 400 à 4000, à travers une zone tubulaire de précondensation disposée essentiellement verticalement, de haut en bas, à une température supérieure à 240°C et sous pression réduite, ce qui permet de former un précondensat et des diols à l'état de vapeur ayant une masse moléculaire < 250 ,
b) on sépare le précondensat et les diols à l'état de vapeur et
c) on extrait le précondensat à partir de la fraction de fond,
caractérisé en ce que, dans l'étape a), on maintient une température de 250 à 360°C, une pression de 0,5 à 20 torr et une durée de séjour de 3 à 10 minutes et la zone tubulaire de précondensation présente des inclusions, qui ont une surface libre de 0,3 à 1,5 m²/l et dans l'étape c), on poursuit la condensation du précondensat à une température de 240 à 290°C sous une pression de 0,5 à 20 torr et avec une durée de séjour de 10 à 40 minutes, et l'on obtient du polyester susceptible d'être mis sous forme de granulés.

2. Procédé selon la revendication 1, caractérisé en ce que la zone de précondensation a une surface intérieure de 0,9 à 1,5 m²/l dans son premier tiers vu d'en haut, et une surface intérieure de 0,3 à 0,5 m²/l dans les deux tiers restants.

3. Procédé selon la revendication 1 ou 2, caractérisé en ce que l'on maintient, dans l'étape a), une durée de séjour de 4 à 7 minutes.

4. Procédé selon l'une quelconque des revendications 1 à 3, caractérisé en ce que, dans la zone de précondensation, on condense jusqu'à une viscosité relative de 1,06 à 1,18.

5. Procédé selon l'une quelconque des revendications 1 à 4, caractérisé en ce que, dans l'étape c), on condense jusqu'à une viscosité relative de 1,20 à 1,50.

6. Procédé selon l'une quelconque des revendications 1 à 5, caractérisé en ce que, après l'étape c), on poursuit la condensation du polyester sous forme solide, dans une atmosphère de gaz inerte, à une température de 5 à 40°C en-dessous du point de fusion du polyester en phase solide.
